Europäisches Patentamt

European Patent Office

Office européen des brevets

(19)

(11) Publication number: **0 177 889 B1**

## (12) EUROPEAN PATENT SPECIFICATION

(45) Date of publication of patent specification: **04.09.91**   (51) Int. Cl.⁵: **G09G 1/16**

(21) Application number: **85112487.5**

(22) Date of filing: **02.10.85**

(54) **CRT display control apparatus.**

(30) Priority: **04.10.84 JP 207027/84**

(43) Date of publication of application:
**16.04.86 Bulletin 86/16**

(45) Publication of the grant of the patent:
**04.09.91 Bulletin 91/36**

(84) Designated Contracting States:
**DE FR GB**

(56) References cited:

**COMPUTER DESIGN, vol. 23, no. 3, March 1984, pages 181-191, Winchester, Massachusetts, US; B.A. MAY et al.: "VLSI chips combine text and graphics"**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Kinoshita, Kiyoshi**
**c/o Patent Div. K.K. Toshiba 1-1 Shibaura**
**1-chome**
**Minato-ku Tokyo 105(JP)**

(74) Representative: **Henkel, Feiler, Hänzel & Part-**
**ner**
**Möhlstrasse 37**
**W-8000 München 80(DE)**

## Description

The present invention relates to an improved CRT display control apparatus arranged by adding a graphic display function to a display system based on character display.

CRT display units have been used as computer output devices in a variety of applications, and various software tools are available. Strong demand for superposed display by using a character display function conventionally provided in the CRT display unit of this type has arisen. In order to satisfy such a demand, one graphic function method is the mosaic graphic function. However, this method does not provide satisfactory results. Therefore, a conventional character/graphic display control apparatus with a graphic display function is proposed.

Character display is normally controlled by a CRT controller, and graphic display, by a graphic controller. A dot clock signal $DOT and a character clock signal $CHAR are used to control the display timing. A character display output signal from one shift register is superposed on a graphic display output signal from the other shift register to constitute a video signal. The video signal is displayed on a CRT monitor.

In a conventional CRT display of this type, the operation timing of the CRT and graphic controllers must be adjusted. For example, a block corresponding to a one-character display area of character display comprises 10 dots along the horizontal direction in the graphic display mode. Ten-bit pixel data must therefore be simultaneously processed. As compared with 8-bit processing, hardware and software are complicated, resulting in inconvenience. Furthermore, when a circle is displayed in the graphic display mode, the aspect ratio (i.e., a ratio of vertical length to horizontal length on the display screen) is not optimal. The circle is then displayed as an ellipse, resulting in poor display.

It is an object of the present invention to provide a CRT display control apparatus with a graphic display function, which is compatible with conventional character display software and has an improved aspect ratio (vertical/horizontal ratio) and allows easy graphic processing.

In order to achieve the above object of the present invention, there is provided a display control apparatus for displaying both character data and graphic data on a single screen by using a CRT character display unit, comprising:

a character pattern generator for generating a character dot pattern corresponding to one character;

a graphic memory for storing graphic data;

means for generating a basic clock signal;

means for generating a character clock signal by frequency-dividing the basic clock signal;

means for generating a character dot clock signal having a period $1/n$ of a period of the character clock signal so as to set a character display dot number to be n in a one-character display area along a scan direction;

means for generating a graphic dot clock signal having a period $1/m$ of the period of the character clock signal so as to set a graphic display dot number to be m in the one-character display area along the scan direction; and

means for superposing the character data on the graphic data which are generated in response to the character and graphic dot clock signals.

According to the present invention, the graphic display function can be added to the conventional character display function, and the character display software is compatible even if the graphic display function is added.

In addition, graphic data can be processed in units of 8 bits, the software operation can be simplified, and the aspect ratio (the vertical/horizontal ratio on the display screen) can be improved.

Other objects and features of the present invention will be apparent from the following description taken in connection with the accompanying drawings, in which:

Fig. 1 is a block diagram of a CRT display control apparatus according to an embodiment of the present invention;

Fig. 2 is a circuit diagram of a display control clock signal generator (DSG) shown in Fig. 1;

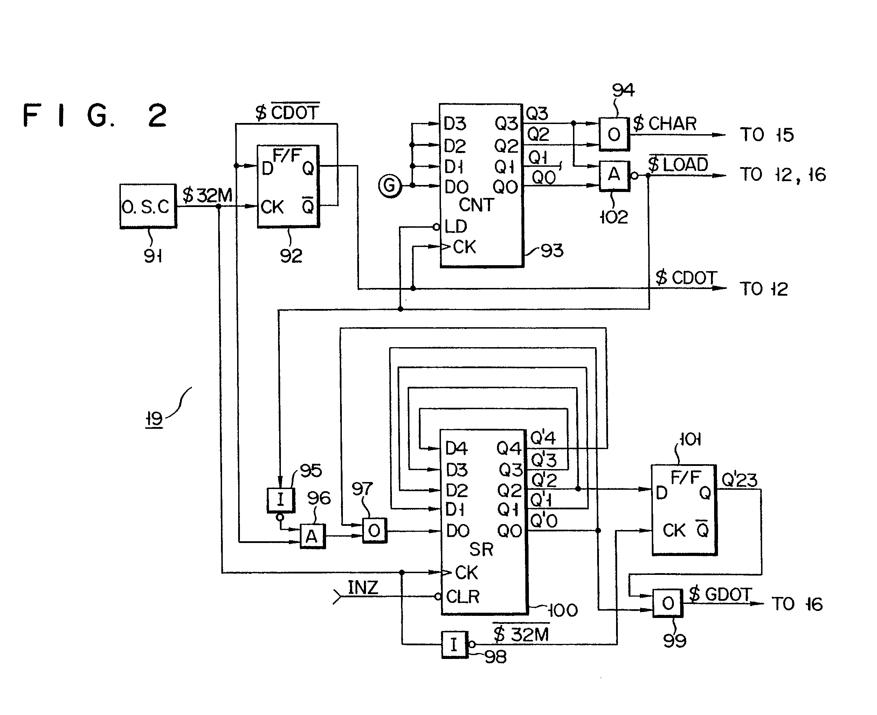

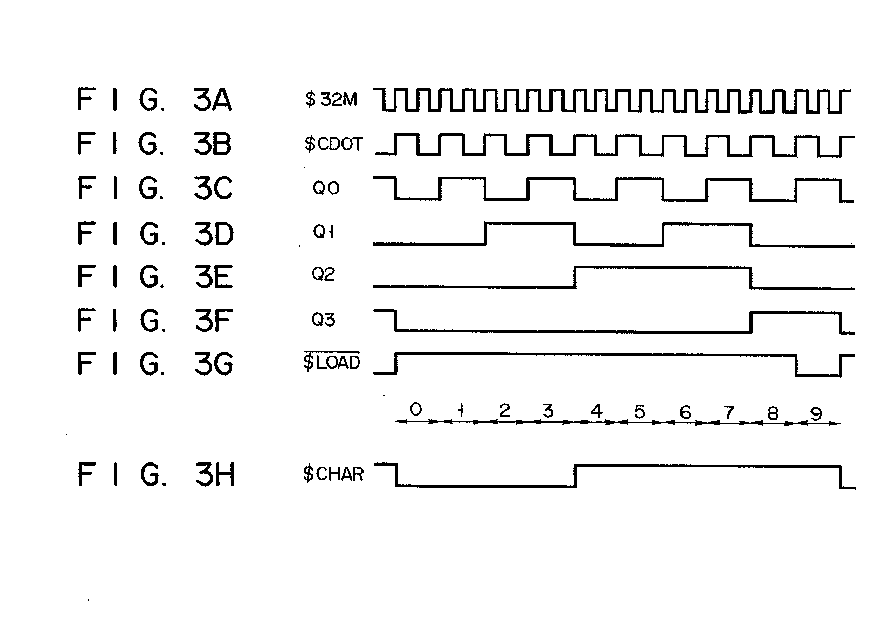

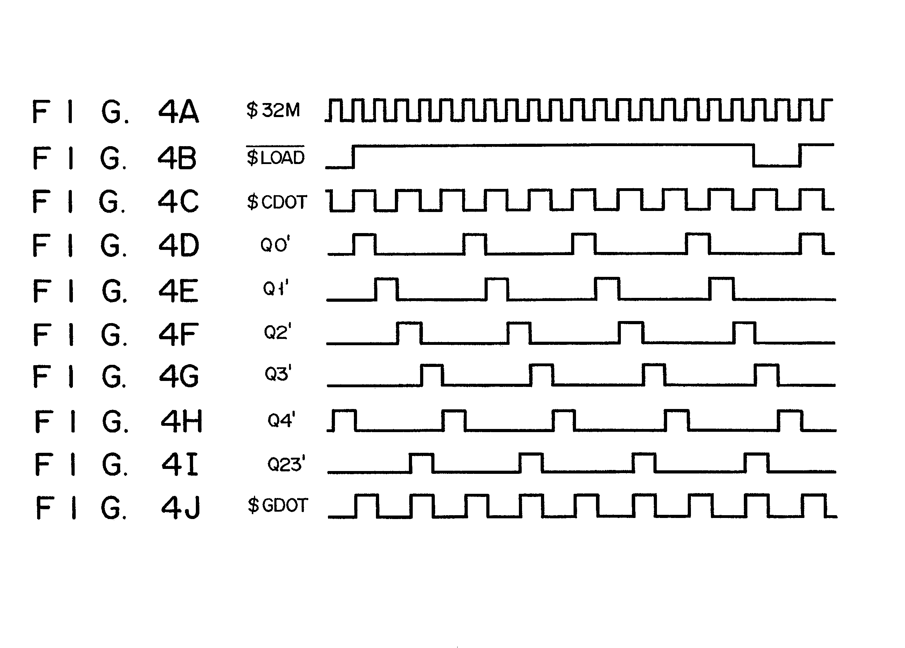

Figs. 3A through 3H and Figs. 4A through 4J are timing charts for explaining the operation of the DSG of Fig. 2, in which Fig. 3A shows a basic clock signal, Fig. 3B shows a character dot clock signal, Figs. 3C through 3F show outputs Q0 through Q3 from a counter 93, Fig. 3G shows a load clock signal, Fig. 3H shows a character clock signal, Fig. 4A shows a basic clock signal, Fig. 4B shows a load clock signal, Fig. 4C shows a dot clock signal, Figs. 4D through 4H show outputs Q0' through Q4' from a shift register 100, Fig. 4I shows an output Q from a flip-flop 101, and Fig. 4J shows a graphic dot signal; and

Fig. 5 is a representation showing a character and graphic display in a one-character display area.

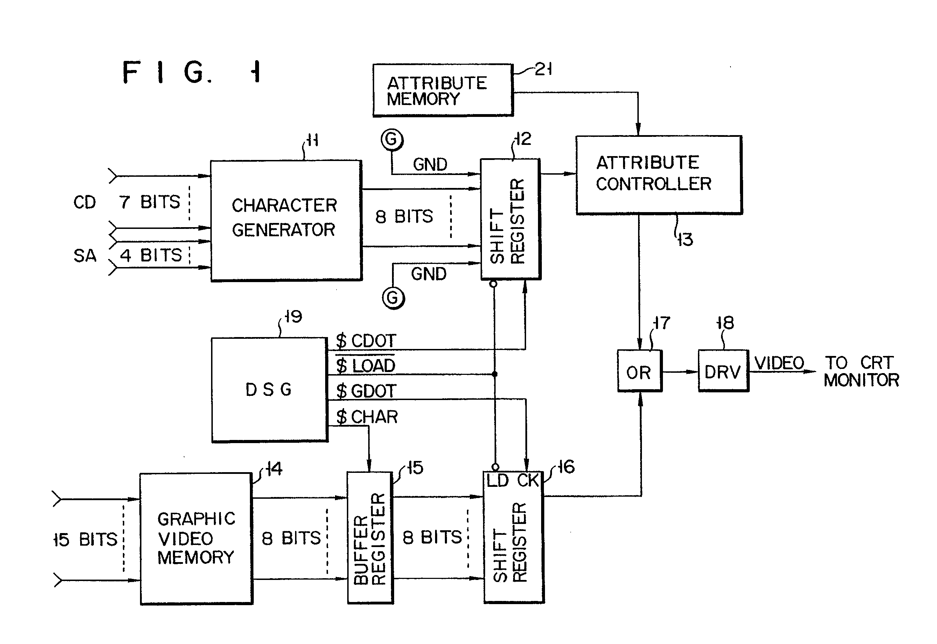

Fig. 1 is a block diagram of a CRT display control apparatus according to an embodiment of the present invention. A character generator 11 receives code data (CD) and a slice address (SA) and generates dot font data for character display. The dot font data from the generator 11 is supplied to a shift register 12. The register 12 generates serial data in accordance with a character dot clock signal ($CDOT) generated by a display control clock signal generator (DSG) 19. The output from the register 12 is supplied to an attribute controller 13 together with an attribute data bit from an attribute memory 21.

An output from a graphic video memory 14 for storing graphic display data is supplied to a buffer register 15 for determining the graphic display timing with reference to the character display timing. A character clock signal ($CHAR) is supplied from the generator 19 to the register 15. An output from the register 15 is supplied to a shift register 16. The register 16 converts the graphic data to serial data in accordance with a graphic dot clock signal ($GDOT) from the generator 19. An OR gate 17 receives input data from the controller 13 and the register 16 and superposes the character display signal on the graphic display signal. The resultant video signal is supplied to a video signal driver (DRV) 18. An output from the driver 18 is supplied together with horizontal and vertical sync signals (HSYNC/VSYNC) to a display monitor. An internal arrangement of the generator 19 is shown in Fig. 2.

Fig. 2 is a block diagram showing the internal arrangement of the generator 19 of Fig. 1. A basic clock signal ($32M) from a quartz oscillator (OSC) 91 is supplied to clock input terminals (CK) of a flip-flop 92 and a shift register 100. The frequency of the basic clock signal ($32M) from the oscillator 91 is divided by 2 by the flip-flop 92, and a 1/2 frequency-divided signal is supplied to a decimal counter (CNT) 93 and the register 12 of Fig. 1. Outputs Q3 and Q2 from the counter 93 are supplied to an OR gate 94. An output from the OR gate 94 is supplied as the character clock signal ($CHAR) to the register 15 of Fig. 1. The output Q3 and an output Q0 from the counter 93 are supplied to a NAND gate 102. An output from the NAND gate 102 is supplied as a load clock signal $LOAD to the registers 12 and 16 of Fig. 1. The signal $LOAD from the NAND gate 102 is supplied to a load input terminal LD of the counter 93 and an inverter 95. An output (i.e., the $\overline{Q}$ output from the flip-flop 92) from the inverter 95 is supplied together with the signal $CDOT to an AND gate 96. An output from the AND gate 96 is supplied to the D0 input terminal of the register 100 through the OR gate 97.

Outputs Q0' through Q3' from the register 100 are supplied to the input terminals D1 through D4, respectively, thereof. The output Q2' from the register 100 is supplied to the D input terminal of the flip-flop 101, and the output Q0' is supplied to one input terminal of an OR gate 99. An output Q23' from a flip-flop 101 is supplied to the other input terminal of the OR gate 99. An output from the OR gate 99 is supplied as the signal $GDOT to the register 16 of Fig. 1. The signal $32M from the oscillator 91 is inverted by an inverter 98, and an inverted signal $\overline{32M}$ is supplied to the clock terminal of the flip-flop 101.

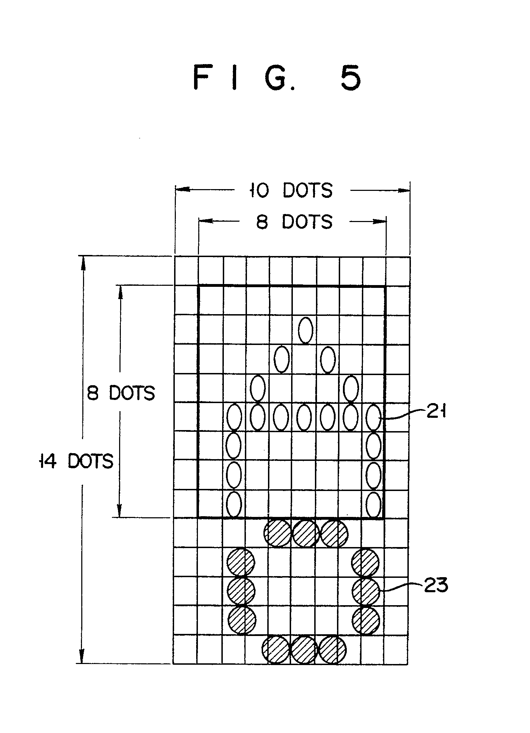

Figs. 3A through 3H and Figs. 4A through 4J are respectively timing charts of the signals shown in Figs. 1 and 2. Fig. 5 shows a character and graphic display in the one-character area. Referring to Fig. 5, reference numeral 21 denotes a character display dot; and 23, a graphic display dot.

The operation of the CRT display control apparatus having the arrangement described above will be described hereinafter. 10-bit display data consisting of 8-bit dot font data from the generator 11 and a 2-bit ground signal (GND) is loaded in the register 12 in response to the signal $\overline{LOAD}$. The register 12 generates the display data as bit serial data in response to the signal $CDOT from the generator 19. The bit display data is supplied as a video signal (VIDEO) to a CRT monitor (not shown) through the OR gate 17 and the driver 18. Therefore, as shown in Fig. 5, in the character display mode, the right and left dots corresponding to the ground signal are not displayed, and the dot font data is displayed in the 8-dot area.

Meanwhile, 8-bit graphic display data from the memory 14 is temporarily stored in the 8-bit buffer register 15 in response to the signal $CHAR so as to adjust the graphic display timing with that of the character display data. The graphic display data obtained through the register 15 is loaded in the register 16 in response to the signal $\overline{LOAD}$. The register 16 generates bit serial data in response to the signal $GDOT. The graphic display serial output signal is superposed on the character display serial signal by the OR gate 17. The resultant signal is generated through the driver 18. The period of the signal GDOT is 1/8 of the period of the signal $CHAR. As shown in Fig. 5, the 8-dot graphic display data is displayed in the one-character display area along the horizontal direction (i.e., the scan direction).

The operation of the generator 19 will be described with reference to Fig. 2, Figs. 3A through 3H, and Figs. 4A through 4J. The 32-MHz basic clock signal $32M (Fig. 3A) from the oscillator 91 is supplied to the terminal CK of the flip-flop 92. The flip-flop 92 divides the frequency of the clock signal by 2 and generates the 16-MHz character dot clock signal $CDOT shown in Fig. 4C. The signal $CDOT is supplied to the clock input terminal of the counter 93, so that the counter 93 is driven. The counter 93 generates bit signals Q0 through Q3, as shown in Figs. 3C through 3F. The signals Q3 and Q2 are supplied to the OR gate 94, and the signals Q3 and Q0 are supplied to the AND gate 102. The OR gate 94 generates the signal $CHAR shown in Fig. 3H. The NAND gate 102 generates the signal $\overline{LOAD}$ shown in Fig. 3G. The period of the signal $CHAR corresponds to the one-dot display time in the character display mode, and the 10 periods (equal to one period of the signal $CHAR) of the signal $CDOT correspond to the display time of the one-character display area along the horizontal direction.

When the AND gate 96 receives the signal $LOAD of low level and the signal $CDOT of high level, it generates a high level signal. This signal is supplied to the D0 input terminal of the register 100 through the OR gate 97. The register 100 generates the signal Q0' (Fig. 4D) in synchronism with the basic clock signal $32M. The signal Q0' is fed back to the D1 input terminal of the register 100, so that the register 100 generates the signal Q1' (Fig. 4E). In the same manner as described above, the register 100 generates outputs Q2' through Q4' shown in Figs. 4F through 4H. The output Q4' is fed back to the D0 input terminal of the register 100 through the OR gate 97. The shifting described above is repeated. The output Q2' from the register 100 is supplied to the D input terminal of the flip-flop 101 and is reset by the basic clock signal $32M which is 180° out of phase. The flip-flop 101 generates a signal Q23' delayed by 1/2 of the basic clock period from the signal Q2'. The signal Q0' from the register 100 and the signal Q23' from the flip-flop 101 are supplied to the OR gate 99. The OR gate 99 generates the signal $GDOT shown in Fig. 4J. The period of the graphic dot clock signal ($GDOT) corresponds to the one-dot display time, and 8 periods (equal to one period of the signal $CHAR) correspond to the display time of the one-character display area along the horizontal direction. As shown in Fig. 5, in the character display mode, 10 dots are displayed horizontally; and in the graphic display mode, 8 dots are displayed horizontally. In the graphic display mode, the display data is processed in byte units, so that the hardware configuration of the memory can be simplified. Software processing using a CPU such as a microprocessor can also be simplified.

In the above embodiment, characters can be displayed with a maximum of 80 characters × 25 lines (2,000 characters). The one-character display area consists of 10 dots × 14 slices. A maximum number of dots to be displayed on the entire screen is 800 × 350. However, in the graphic display mode, a maximum number of dots to be displayed is 640 × 350. In the normal character display mode, since the vertical length is longer than the horizontal length, an aspect ratio (vertical/horizontal ratio) is low. When a circle is to be drawn in the graphic display mode, an ellipse has the vertical major axis. Therefore, when the period of the signal $GDOT is increased, the graphic dot display time can be increased, thereby improving the aspect ratio and drawing a true circle.

## Claims

1. A display control apparatus for displaying both character data and graphic data on a single screen by using a CRT character display unit, comprising a character pattern generator (11) for generating a character dot pattern corresponding to one character, a graphic memory (14) for storing graphic data, means (91) for generating a basic clock signal, and means (92, 93, 94) for generating a character clock signal by frequency-dividing the basic clock signal,
   characterized in that there are provided:
   means (92) for generating a character dot clock signal having a period 1/n of a period of the character clock signal so as to set a character display dot number to be n in a one-character display area along a scan direction;
   means (100, 101, 99) for generating a graphic dot clock signal having 1/m of the period of the character clock signal so as to set a graphic display dot number to be m in the one-character display area along the scan direction; and
   means (17) for superposing the character data on the graphic data which are generated in response to the character and graphic dot clock signals.

2. An apparatus according to claim 1, further comprising a buffer register (15), connected to an output terminal of said graphic memory (14), for receiving the graphic data from said graphic memory (14) and generating the graphic data in synchronism with the character clock signal so as to synchronize character and graphic display timings.

## Revendications

1. Dispositif de commande d'affichage pour afficher à la fois des données de caractère et des données graphiques sur un unique écran en utilisant une unité d'affichage de caractère à tube à rayons cathodiques (CRT), comprenant un générateur de configuration de caractère (11) pour générer une configuration de points sous forme de caractère qui correspond à un seul caractère, une mémoire graphique (14) pour stocker des données graphiques, un moyen (91) pour générer un signal d'horloge de base et un moyen (92, 93, 94) pour générer un signal d'horloge de caractère en divisant en fréquence le signal d'horloge de base,

caractérisé en ce que sont prévus :

un moyen (92) pour générer un signal d'horloge de points de caractère qui a une période égale à 1/n fois une période du signal d'horloge de caractère de manière à fixer à n le nombre de points d'affichage de caractère dans une zone d'affichage d'un seul caractère suivant une direction de balayage ;

un moyen (100, 101, 99) pour générer un signal d'horloge de points graphiques qui a une période égale à 1/m fois la période du signal d'horloge de caractère de manière à fixer à m le nombre de points d'affichage graphique dans la zone d'affichage d'un seul caractère suivant la direction de balayage ; et

un moyen (17) pour superposer les données de caractère sur les données graphiques qui sont générées en réponse aux signaux d'horloge de caractère et de points graphiques.

2. Appareil selon la revendication 1, comprenant en outre un registre tampon (15) qui est connecté à une borne de sortie de ladite mémoire graphique (14) pour recevoir les données graphiques qui proviennent de ladite mémoire graphique (14) et pour générer les données graphiques en synchronisation avec le signal d'horloge de caractère de manière à synchroniser les cadencements des affichages de caractère et graphique.

**Patentansprüche**

1. Anzeigesteuereinrichtung zum Anzeigen von Zeichendaten und graphischen Daten auf einem einzigen Schirm mittels einer Kathodenstrahlröhren-Zeichenanzeigeeinheit, mit einem Zeichenmustergenerator (11) zum Erzeugen eines Zeichenpunktmusters entsprechend einem Zeichen, einem graphischen Speicher (14) zum Speichern von graphischen Daten, einer Einrichtung (91) zum Erzeugen eines Grundtaktsignales und einer Einrichtung (92, 93, 94) zum Erzeugen eines Zeichentaktsignales durch Frequenzteilen des Grundtaktsignales,

dadurch gekennzeichnet, daß vorgesehen sind:

eine Einrichtung (92) zum Erzeugen eines Zeichenpunkttaktsignales mit einer Periode 1/n einer Periode des Zeichentaktsignales, um eine Zeichenanzeigepunktzahl auf n in einer Ein-Zeichen-Anzeigefläche entlang einer Abtastrichtung zu setzen,

eine Einrichtung (100, 101, 99) zum Erzeugen eines graphischen Punkttaktsignales mit 1/m der Periode des Zeichentaktsignales, um eine graphische Anzeigepunktzahl auf m in der Ein-Zeichen-Anzeigefläche entlang der Abtastrichtung zu setzen, und

eine Einrichtung (17) zum Überlagern der Zeichendaten auf die graphischen Daten, die abhängig von den Zeichen- und graphischen Punkttaktsignalen erzeugt sind.

2. Vorrichtung nach Anspruch 1, weiterhin mit einem Pufferregister (15), das mit einem Ausgangsanschluß des graphischen Speichers (14) verbunden ist, um die graphischen Daten von dem graphischen Speicher (14) zu empfangen und die graphischen Daten synchron mit dem Zeichentaktsignal zu erzeugen, so daß Zeichen- und graphische Anzeigezeiten synchronisiert sind.

# F I G. 1

EP 0 177 889 B1

FIG. 2

EP 0 177 889 B1

FIG. 3A    $32M

FIG. 3B    $CDOT

FIG. 3C    QO

FIG. 3D    Q1

FIG. 3E    Q2

FIG. 3F    Q3

FIG. 3G    $LOAD

0   1   2   3   4   5   6   7   8   9

FIG. 3H    $CHAR

F I G. 4A    $32M

F I G. 4B    $LOAD

F I G. 4C    $CDOT

F I G. 4D    Q0'

F I G. 4E    Q1'

F I G. 4F    Q2'

F I G. 4G    Q3'

F I G. 4H    Q4'

F I G. 4I    Q23'

F I G. 4J    $GDOT

# F I G. 5